(19) Europäisches Patentamt
European Patent Office
Office européen des brevets

(11) EP 0 508 688 B1

(12) **EUROPEAN PATENT SPECIFICATION**

(45) Date of publication and mention
of the grant of the patent:
**11.12.1996 Bulletin 1996/50**

(51) Int Cl.6: **G01N 15/14**, G01N 21/00, G01N 15/00

(21) Application number: **92302934.2**

(22) Date of filing: **03.04.1992**

(54) **Method and apparatus for analysing particles**

Verfahren und Vorrichtung zur Analyse von Teilchen

Procédé et dispositif pour l'analyse des particules

(84) Designated Contracting States:
**DE FR GB IT**

(30) Priority: **05.04.1991 JP 102116/91**

(43) Date of publication of application:
**14.10.1992 Bulletin 1992/42**

(73) Proprietor: **TOA MEDICAL ELECTRONICS CO., LTD.**
**Chuoku, Kobe (JP)**

(72) Inventors:
• **Isami, Yasushi**
  **Himejishi, Hyogoken (JP)**
• **Kojou, Naomiki**
  **Kakogawashi Hyogoken (JP)**

(74) Representative: **Price, Paul Anthony King**
**D. Young & Co.,**
**21 New Fetter Lane**
**London EC4A 1DA (GB)**

(56) References cited:
**EP-A- 0 158 147**   **EP-A- 0 160 201**
**EP-A- 0 163 206**   **EP-A- 0 286 088**
**EP-A- 0 288 029**   **EP-A- 0 317 809**
**WO-A-90/12308**    **AT-B- 365 341**
**US-A- 4 515 274**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a method and apparatus for analyzing particles. For example, an image of a thin wide flow of a sample liquid (such as urine taken from a subject) is processed in order to classify or count visible components in the sample liquid.

A known apparatus uses a video camera to take pictures of cells or particles in a sheath flow, and classifies or counts the particles by image processing. In the sheath flow, the sample liquid with its particles in suspension is surrounded by a laminar sheath liquid and appears flattened with a large width to depth ratio. This general type of apparatus is disclosed in US-A-4,338,024. A more detailed example of this type of prior art apparatus is discussed below.

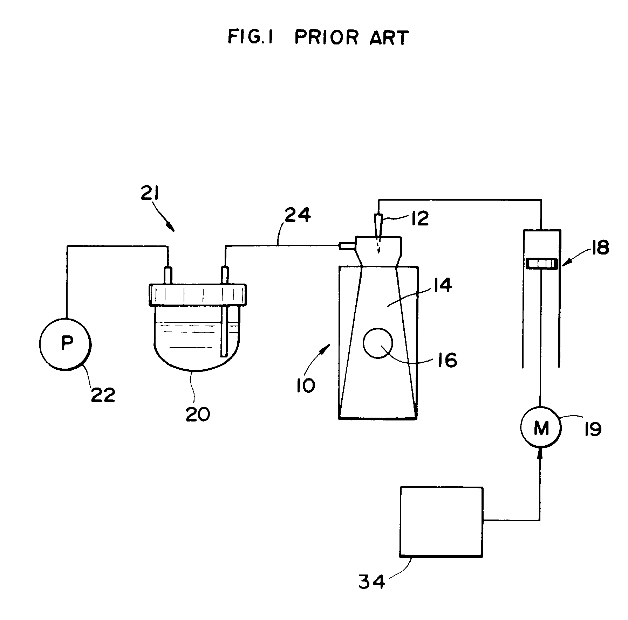

Fig. 1 is a schematic diagram of the more detailed example of prior art apparatus, which is intended to analyze components (blood cells, epithelial cells, cylinders, etc.) in a urine sample. The urine sample is pretreated by dyeing or the like and is discharged from a nozzle 12 at a specific flow rate by sample liquid discharge means 18. The urine sample passes into a cell 10 arranged to produce a sheath flow. A sheath liquid is fed into the cell 10 by sheath liquid feed means 21, and a thin wide sample liquid flow is formed in a rectangular cross-section passage 14 having a large width to depth ratio. The sheath liquid is fed by a pump 22 through a sheath liquid chamber 20 (a syringe may be used for feeding the sheath liquid, but the cost is higher). The sample liquid discharge means 18 is a syringe which is driven, for example, by a motor 19.

A strobe is positioned on one side of the passage 14 (the rear side as viewed in Fig. 1) and emits a beam across the passage. A video camera (not shown) is positioned on the other side of the passage and takes a still image of the sample liquid. An objective lens (not shown) is disposed at location 16. The still image is analyzed by an image processor, and the particles visible in the image are classified and counted.

When the ambient temperature changes, the viscosity of a liquid varies, which affects the liquid flow. In a system where the sheath liquid is supplied at a specific pressure, the flow rate of the sheath liquid varies as its flow resistance changes and any variation alters the balance between the flow rates of the sample liquid and the sheath liquid. When the temperature increases, the flow rate of the sheath liquid increases abruptly.

Figs. 2 to 5 illustrate the flow of sample liquid in the cell 10. Figs. 2 and 4 are plan views, Fig. 3 is a sectional view along line 3-3 in Fig. 2, and Fig. 5 is a sectional view along line 5-5 in Fig. 4. Numeral 26 is a sample liquid zone and numeral 28 is a video camera viewing area.

At low temperatures, the viscosity of the liquid (the sheath liquid in this case) is high, and the flow rate of the sheath liquid is low, and the sample liquid has a relatively broad width W1 and a relatively great depth D1 as shown in Figs. 2 and 3. At high temperatures, as shown in Fig. 4 and 5, the sample liquid has a relatively narrow width W2 and a relatively small depth D2.

The viewing area 28 remains unchanged and thus the volume of sample liquid that is viewed and analyzed is not constant. This may affect the result of the analysis, e.g. because the number of particles counted will vary as different volumes of samples liquid are viewed.

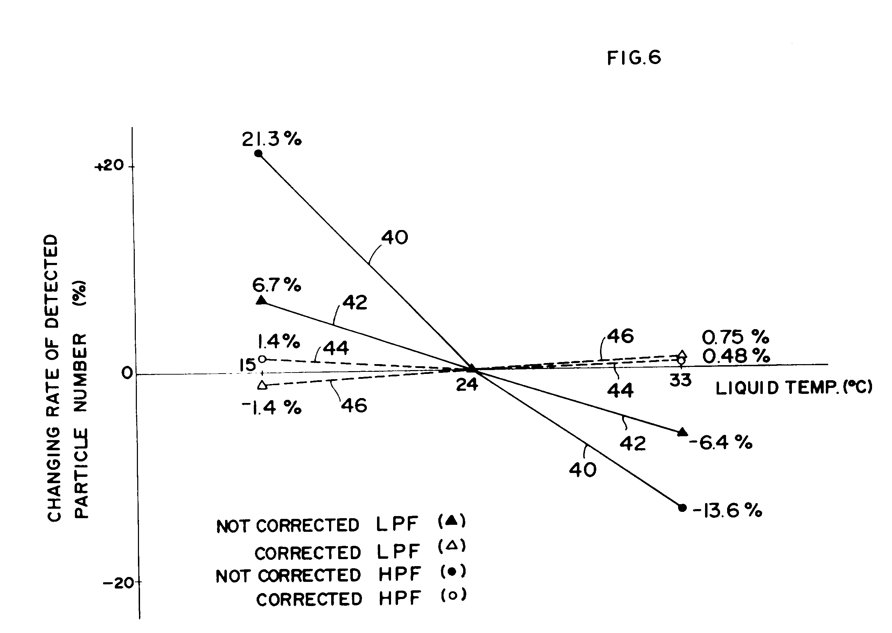

Fig. 6 plots the percentage change in the number of detected particles (Y axis) against liquid temperature (X axis). The reference temperature is 24°C. The solid lines indicate the characteristics of conventional apparatus for both a low scale factor image (LPF) and a high scale factor image (HPF). It may be seen that more particles are detected at low temperatures than at high temperatures.

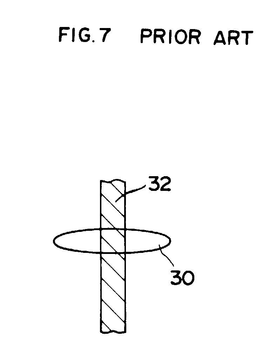

In an ordinary flow cytometer, changes in the pressure of the sheath liquid vary the thickness of the sample liquid flow. However, as shown in Fig. 7, the light beam 30 completely crosses the sample liquid flow 32, and the entire width of the sample liquid flow is monitored. Therefore, if the temperature fluctuates, the change in the flow rate of the sample affects only the frequency band of the signals from the particles. It does not affect the number of particles detected, because the volume of the sample liquid flow that is intersected by the light beam 30 remains constant.

In an apparatus designed to analyze a part, but not all, of the sample liquid flow, it is important to minimize the fluctuations of flow due to temperature variations.

To solve this problem, for example, in the sheath liquid piping 24 shown in Fig. 1,

(a) a thermostatic control unit may be disposed, or
(b) flow rate detecting means may be provided to control the pressure of pump 22.

In the case of (a), a heater or a cooler and its temperature control means are needed, which increases the cost and size of the apparatus. In practice, there is used a block of high thermal conductivity in which a flow passage is formed. In order to keep this block at a constant temperature, a heater of a larger thermal capacity is required.

In the case of (b), flow rate detecting means and pump output pressure control means are necessary, and this increases the cost of the apparatus. Besides, it is difficult to control the pump output pressure precisely.

According to a first aspect of the present invention, there is provided a method of analyzing particles by passing light through a thin wide sample liquid flow in a flow of sheath liquid to obtain an image, and processing the image to analyze components in the sample liquid, wherein the sheath liquid is supplied at a specific pressure, and the sample liquid flow rate is corrected on the basis of the ambient temperature.

According to a second aspect of the present invention, there is provided apparatus for analyzing particles by passing light through a thin wide sample liquid flow in a flow of sheath liquid to obtain an image, and processing the image to analyze components in the sample liquid, comprising: sheath liquid supply means for supplying sheath liquid at a specific pressure, sample liquid discharge means for supplying sample liquid at a controlable discharge rate, a temperature sensor for detecting the ambient temperature, a temperature measuring circuit for determining the temperature on the basis of the output of the temperature sensor, and a driving circuit for driving the sample liquid discharge means at a discharge rate corrected on the basis of an output signal from the temperature measuring circuit.

Embodiments of the present invention permit high precision analysis by keeping constant the width and thickness of the sample liquid flow, regardless of changes in ambient conditions such as temperature, without increasing the cost or size of the apparatus.

The driving circuit may calculate a specific value based on the output signal from the temperature measuring circuit and drive the sample liquid discharge means at that value.

The driving circuit may contain data for defining the relationship between the temperature information and the operating speed of the sample liquid discharge means. Thus, the operating speed of the sample liquid discharge means is determined from the temperature information and the data.

If different images are taken using different scale factors, the driving circuit may contain data to permit the operating speed of the sample liquid discharge means to be corrected on the basis of the scale factor being used.

The ambient temperature is measured by the temperature sensor and the temperature measuring circuit, and the temperature information is sent to the driving circuit. In the driving circuit, from the measured temperature information and the preset data, the operating speed of the sample liquid discharge means is determined.

Thus, at a low ambient temperature, the flow rate of the sample liquid is small, and at a high ambient temperature is is large, so that the flow rates of the sheath liquid and sample liquid are always constantly balanced regardless of the ambient temperature. Thus, the width and thickness of the sample liquid are always the same, and the number of photographed particles is also constant.

If the scale factor is varied, the flow rate of the sample liquid is corrected so that the number of photographed particles is always the same whether the image is taken at a high scale factor or at a low scale factor.

The invention will now be described by way of a non-limiting embodiment with reference to the accompanying drawings, in which:

Fig. 1 is a block diagram showing an example of conventional apparatus for analyzing particles;

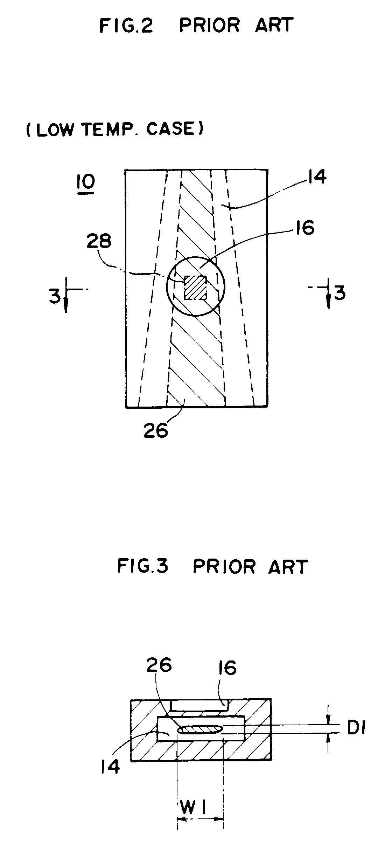

Fig. 2 is an explanatory diagram showing low temperature flow of sample liquid in a sheath flow cell;
Fig. 3 is a section along the line 3-3 in Fig. 2;

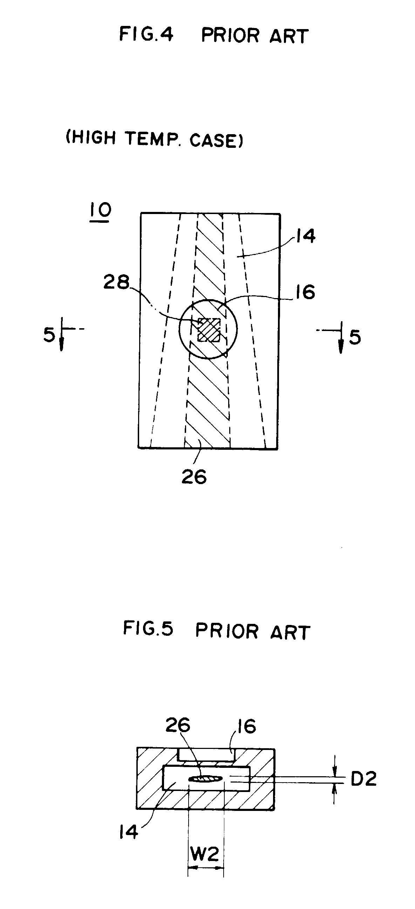

Fig. 4 is an explanatory diagram showing high temperature flow of sample liquid in a sheath flow cell;
Fig. 5 is a section along the line 5-5 in Fig. 4;
Fig. 6 is a graph showing the relationship between the liquid temperature and the change in the number of detected particles;
Fig. 7 is an explanatory diagram showing the relationship between the sample liquid flow and a light beam in an ordinary flow cytometer;

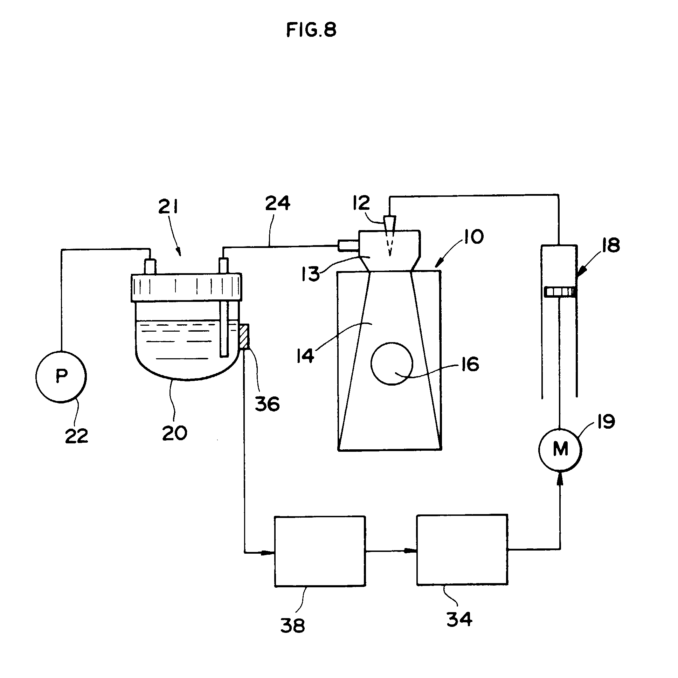

Fig. 8 is a block diagram showing an embodiment of an apparatus for analyzing particles in accordance with the present invention;

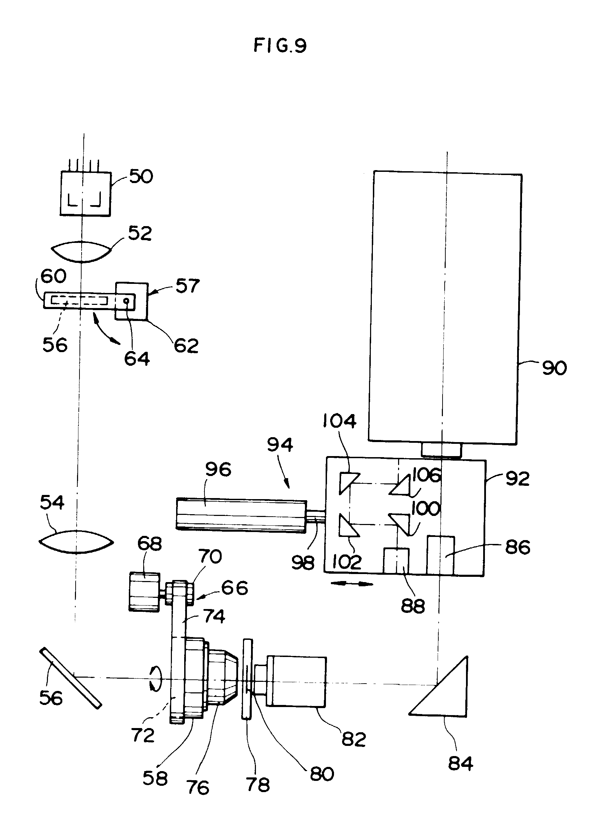

Fig. 9 is a block diagram for explaining the changeover of photographic scale factors for the apparatus of Fig. 8;

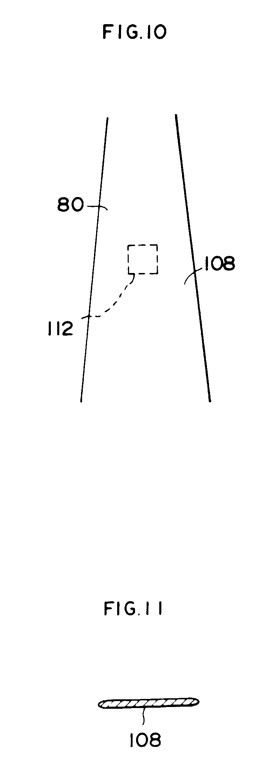

Fig. 10 is an explanatory diagram showing an example of a thin wide flow of sample liquid;

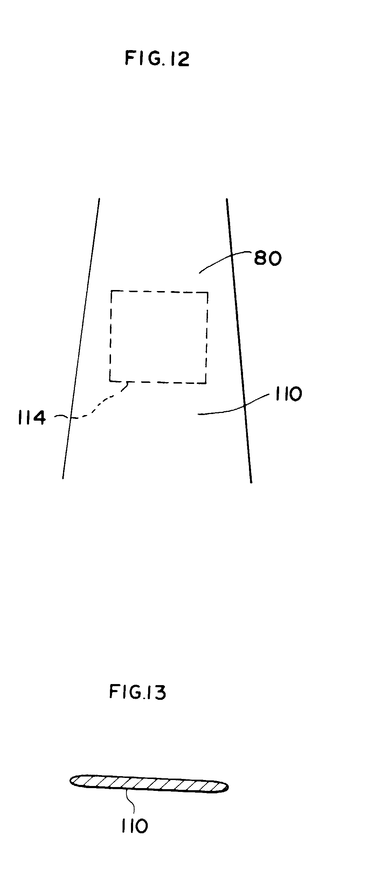

Fig. 11 is a section of the sample liquid flow of Fig. 10;
Fig. 12 is an explanatory diagram showing another example of a thin wide flow of sample liquid; and
Fig. 13 is a section of the sample liquid flow of Fig. 12.

In Fig. 8, a temperature sensor 36 for dectecting the temperature of the sheath liquid is mounted on the outer wall of a sheath liquid chamber 20. The temperature sensor 36 is sufficient, even though it does not directly detect the temperature of the sheath liquid. Instead, the sensor 36 works indirectly by measuring the temperature of a point whose temperature corresponds to the temperature of the sheath liquid.

The signal from the temperature sensor 36 is amplified by a temperature measuring circuit 38. For example, the signal may be A/D converted. A signal containing temperature information is sent from the temperature measuring circuit 38 to a driving circuit 34. A rectangular cross-section passage 14 (a thin wide passage or a flattened passage) has a tapered passage 13 connected to its upper end.

The sample liquid discharge means 18 is, example, of the syringe type and moves its piston by converting the normal and reverse rotary motion of the motor 19 into a reciprocating linear motion. By means of a drive signal from the driving circuit 34, the discharge flow rate and suction flow rate of the discharge means 18 may be set to desired values. The flow rate and rotational speed of the motor 19 are proportionally related. Sheath liquid supply means 21 comprises sheath liquid chamber 20, pump 22, sheath liquid piping 24 and other components (not shown).

As shown by solid lines 40, 42 in Fig. 6, when there is no correction in response to variations in liquid temperature, the number of detected particles changes. The lines 40, 42 represent the changes in the number of detected particles for a high scale factor image (HPF) and a low scale factor image (LPF), respectively.

There is, however, a specific relationship between the number of detected particles and the sample liquid discharge flow rate. Accordingly, using the relationship between the number of detected particles and temperature as disclosed by the solid lines 40, 42 in Fig. 6, it is necessary to decide how fast the motor 19 of the sample liquid discharge means 18 should be rotated in order to keep constant the number of detected particles regardless of the temperature and regardless of the image scale factor. That is, the correspondence between the temperature and the required correction of the rotational speed of the motor can be obtained. This correspondence data is stored in the driving circuit 34. Based on the signal from the temperature measuring circuit 38, the motor 19 rotates at a speed corresponding to the measured temperature, and the sample liquid discharge means 18 also discharge the sample liquid at a discharge flow rate corresponding to the measured temperature. By installing a data processing circuit between the temperature measuring circuit 38 and the motor driving circuit 34, the arithmetic operations may be done in this circuit.

More specifically, the rotational speed of the sample liquid discharge means 18 is determined from the following formula.

Rotational speed at low scale factor:

$$Q_L(t) = Q_{L24} \times [1 + 7.32 \times 10^{-3} \times (t - 24) + 2.85 \times 10^{-5} \times (t - 24)^2]$$

Rotational speed at high scale factor:

$$Q_H(t) = Q_{L24} \times [1 + 1.86 \times 10^{-2} \times (t - 24) + 5.05 \times 10^{-4} \times (t-24)^2]$$

where t: ambient temperature [°C]

$Q_{L24}$: rotational speed at 24°C (at low scale factor)
$Q_{H24}$: rotational speed at 24°C (at high scale factor)

The correspondence data may also be obtained by measuring the flow rate of the sheath liquid whilst varying the temperature. Thus, the relationship between the flow rate and the temperature may be determined.

Thus by correcting and varying the rotational speed of the motor 19 depending on the temperature, the number of detected particles may be kept constant, regardless of the temperature, whether at the high scale factor or the low scale factor. Broken lines 44, 46 in Fig. 6 show how the number of detected particles varies with temperature at the high scale factor and the low scale factor, respectively, when the temperature correction is made.

The changeover of photographic scale factor is explained below with reference to Fig. 9. The single-dot chain line denotes the optical axis.

A strobe 50 emits light, for example, for about 50 μs every 1/30th of a second. The light from the strobe 50 is focused by a collector lens 52. It is further transformed into parallel light by a field lens 54, and is reflected through nearly 90 degrees by a mirror 56, and enters an iris 58. In this embodiment, a diffuser plate 56 and its moving means 57 are provided between the collector lens 52 and field lens 54. The diffuser plate 56 is, for example, a ground glass plate and it is supported by a holder 60. The holder 60 is mounted on a rotatable shaft 64 of a rotary actuator 62 or motor or the like. As the shaft 64 rotates, the pulse light from the strobe 50 passes through the diffuser plate 56 in one state, and does not pass in the other state. By passing through the diffuser plate 56, the light is diffused, and unevenness of luminous intensity is removed to form uniform intensity light. As the iris 58 is rotated about its shaft, the area of the iris aperture varies, so that the quantity of light may be regulated. The iris 58 is rotated by variable means 66 in order to change the areas of the iris aperture. The variable means 66 comprises, for example, a toothed pulley 70 on a rotatable shaft of a motor 68 or the like, a toothed pulley 72 around the outer circumference of the iris 58, and a timing belt 74 around both toothed pulley 70, 72.

The light passing through the aperture of the iris 58 is focused by a condenser lens 76 to illuminate the sample liquid flowing along the flattened passage 80 of the flow cell 78. As the iris 58 is closed, the quantity of light becomes smaller and the depth of focus increases. The light passing through the flow cell 78 is magnified, for example, by an objective lens 82 of 10 times magnification, and is reflected by a mirror 84 to pass through a projection lens 86 or 88 so as to be viewed by image pickup means 90 of a video camera or the like. The projection lenses 86, 88 magnify, for example, by 1 and 4 times, respectively. The projection lenses 86, 88 are supported by a holder 92, and the holder 92 is reciprocatively and linearly moved by changeover means 94. The changeover means 94 is, for example, a piston 98 of an air cylinder 96. To move the holder 92 without excessive play, a linear slider is used. When the projection lens 86 is selected, for example, the scale factor is 10 times in total, and the light passing through the lens 86 directly enters the image pickup means 90 to focus an image on the pickup plane. When the projection lens 88 is selected, the scale factor is, for example, 40 times in total. The light passing through the lens 88 is reflected by reflection mirrors 100, 102, 104, 106 to lengthen the optical path and enters image pickup means 90 and is focused as an image on the pickup plane. It is necessary to prevent stray light from passing from the objective lens 82 to the image pickup means 90.

Figs. 10 to 13 show liquid samples 108, 110 flowing in the central part of the flattened passage 80 of the flow cell 78. Figs. 11 and 13 are sectional views of the liquid samples 108, 110. In Figs. 10 and 12, numerals 112, 114 indicate the viewing fields (pickup areas) at the scale factors of, for example, 40 times and 10 times, respectively. The optical system is designed so that $0.61 \ NA/\lambda$ and $2 \times$ pixel interval/M may be approximately equal to each other at the high scale factor, where NA is the number of openings of the lens, $\lambda$ is the light wavelength, and M is the scale factor of the lens. At 40 times, the object field depth is relatively shallow. Accordingly, as shown in Fig. 11, it is necessary for the thickness of the sample liquid flow to be slightly less than the object field depth. Besides, in order to take a picture of as many particles as possible, it is necesary that the sample liquid be flowing so as to cover the entire region of the viewing field. At 10 times, the object field depth is relatively large. Accordingly, as shown in Fig. 11, the focus is matched when the thickness of the sample liquid flow is thin. However, with a small thickness of the sample liquid flow, the amount of sample liquid photographed is also small. Thus, the number of detected particles is small and the precision of the analysis is reduced. A urine sample has a very small number of particles compared with a blood sample. Preferably, therefore, the thickness of the sample liquid flow should be slightly less than the object field depth of the lens. Accordingly, when it is desired to lower the scale factor, it is necessary to make the thickness of the sample liquid sufficient, as shown in Fig. 13.

To vary the thickness of the sample liquid flow, either one or both of the sheath liquid supply volume and sample liquid supply volume should be changed. The apparatus is less complicated if it is designed to change only the sample liquid supply volume.

When changing over the lenses, if the lens position is shifted at every changeover, the lens becomes off focus or the image cannot be picked up correctly. It is therefore necessary to arrange that such troubles do not occur if the lens position is changed only slightly. It is preferable in this respect to have a relatively low scale factor the lens that is moved (in this example, the scale factor of the projection lenses is 1 and 4). One the other hand, the scale factor of the fixed objective lens 82 is relatively large (10 times for the objective lens in this example).

With the apparatus shown in Fig. 9, when photographing the sample liquid at low scale factor, the object field depth of the lens is deep. Therefore, it is possible to focus on a thick sample liquid flow. At a low scale factor, the viewing field is wide. Thus, sufficient light reaches the image pickup means and a bright image is obtained, even if the illuminating light is weak.

When photographing the sample liquid at high scale factor, the object field depth of the lens is shallow. Therefore, unless the thickness of the sample flow is reduced, parts will be out of focus. It is for this reason that the thickness of the sample flow is reduced. At a high scale factor, the viewing field is narrow. When the brightness of the light source is the same as for the low scale factor, the quantity of light reaching the pickup means is insufficient. Accordingly, in the case of the high scale factor, the brightness of the light source is increased relative to the level used for the low scale factor, so that nearly the same quantity of light reaches the image pickup means.

Thus, whether at low scale factor or at high scale factor, a focused, sharp image of consistent brightness is obtained.

It the intensity of the illuminating light is uneven in the pickup viewing field, the intensity may be made uniform by diffusing the light. By using uniform light to illuminate the sample flow, an image of uniform background intensity is obtained. The illumination in the viewing field may be uneven it the viewing field is wide and the scale factor is low.

Blood corpuscles and epithelial cells are easily dyed with dyestuffs. On the other hand, the cylinders are larger than small epithelial cells, crystals, leukocytes and bacteria, and are hardly dyed. Accordingly, in the first place, at high scale factor, relatively small blood corpuscles and epithelials are photographed. Then at low factor, relatively large cylinders, squamous epithelium, leukocyte clots and others are photographed. Thus, because they are looked at second, the dyeing time of the cylinders and the like is increased, if only slightly, thereby producing better dyed cylinders.

The flow rate ratio of the sample liquid and sheath liquid may be varied by changing the feed rate of the sample liquid without changing the feed rate of the sheath liquid, so that the volume of sample liquid in the flat sheath flow may be varied.

Moreover, in the apparatus shown in Fig. 9, the sample liquid is forced out from the tip of the nozzle by the sample liquid supply means, and flows through a tapered passage (numeral 13 in Fig. 8) of the flow cell 78. On the other hand, sheath liquid is supplied from the sheath liquid supply means into the tapered passage of the flow cell 78. The sample liquid is surrounded with sheath liquid, and flows through the tapered passage of the flow cell 78 and into the flattened passage 80 (numeral 14 in Fig. 8). The flattened passage 80 is thin and wide, and the sample conforms to the shape of the flattened passage 80 and therefore becomes thin and wide itself.

Strobed light is continuously emitted by the strobe 50. This light passes through the iris 58. The size of the aperture of the iris 58 is varied by the variable means 66, to change the quantity of light passing through the iris 58. The light that passes through the iris 58 is converged by a condenser lens 76 and passes through the sample liquid in the measurement area of the flattened passage 80. The light is then magnified by a specific factor by the objective lens 82 and the projection lens 86 or 88, and is detected by the image pickup means 90. The projection lenses 86, 88 are held by the holder 92. The holder 92 can be moved by the changeover means 94 to permit changeover of the projection lenses. By coordinating the selection of the sample feed rate of the sample supply means, the aperture area of the iris 58 and the choice of one of the projection lenses 86 and 88, a low scale factor or a high scale factor arrangement may be produced.

The moving means 57 may be used to position the diffuser plate 56 between the strobe 59 and the iris 58. Embodiments of the present invention offer the following advantages:

(1) Although only a part of the sample liquid is analyzed and the sheath liquid is discharged at a specific pressure, the sample discharge flow rate is corrected and varied depending on the temperature. The thickness and width of the sample liquid is kept constant as the ambient temperature fluctuates, and hence the number of detected particles is not affected by temperature changes and the precision of the analysis remains constant.

(2) Compared with methods (a) or (b) of the prior art, the cost is lower and the size of the apparatus is smaller.

(3) When changing over the scale factor whilst making measurements, a correction is made to the sample liquid discharge flow rate to ensure that a specific number of particles may always be detected.

Having described preferred embodiments of the invention with reference to the accompanying drawings, it is to be understood that the invention is not limited to those precise embodiments, and that various changes and modifications may be made by one skilled in the art without departing from the scope of the invention.

## Claims

1. A method of analyzing particles by passing light through a thin wide sample liquid flow in a flow of sheath liquid to obtain an image, and processing the image to analyze components in the sample liquid, wherein

   the sheath liquid is supplied mat a specific pressure, and the sample liquid flow rate is corrected on the basis of the ambient temperature.

2. A method according to claim 1, wherein

   a selection is made between (i) a low scale factor state in which the quantity of light passing through the sample liquid is reduced, the thickness of the sample liquid is increased, and the image is produced at a low scale factor, and (ii) a high scale factor state in which the quantity of light passing through the sample liquid is increased, the thickness of the sample liquid is reduced, and the image is produced at a high scale factor, and the correction of the sample liquid flow rate is also on the basis of which scale factor state has been selected.

3. A method according to claim 1 or 2, wherein the light is strobe light and the image is a still image.

4. Apparatus for analyzing particles by passing light through a thin wide sample liquid flow in a flow of sheath liquid to obtain an image, and processing the image to analyse components in the sample liquid, comprising:

   sheath liquid supply means (21) for supplying sheath liquid at a specific pressure,
   sample liquid discharge means (18) for supplying sample liquid at a controlable discharge rate,
   a temperature sensor (36) for detecting the ambient temperature,
   a temperature measuring circuit (38) for determining the temperature on the basis of the output of the temperature sensor (36), and
   a driving circuit (34) for driving the sample liquid discharge means (18) at a discharge rate corrected on the basis of an output signal from the temperature measuring circuit (38).

5. Apparatus according to claim 4, further comprising:

   an iris (58) disposed in a light path before a flow cell (78),

means (66) for varying the aperture area of the iris (58),
projection lenses (86, 88) of different scale factors, the lenses being individually positionable in the light path after the flow cell (78) and before image detection means (90), and
means (94) for changing over the projection lenses (86, 88),
wherein the apparatus is arranged to permit a selection between (i) a low scale factor in which the quantity of light passing through the sample liquid in the flow cell (78) is reduced, the thickness of the sample liquid is increased, and the image is produced at a low scale factor, and (ii) a high scale factor state in which the quantity of light passing through the sample liquid in the flow cell (78) is increased, the thickness of the sample liquid is reduced, and the image is produced at a high scale factor, and
wherein the correction of the sample liquid discharge rate is also on the basis of which scale factor state has been selected.

**Patentansprüche**

1. Verfahren zum Analysieren von Teilchen durch Hindurchführen von Licht durch einen dünnen breiten Probenflüssigkeitsstrom in einem Hüllenflüssigkeitsstrom, um ein Bild zu erhalten, und Verarbeitung des Bildes zum Analysieren von Bestandteilen in der Probenflüssigkeit, wobei die Hüllenflüssigkeit mit einem spezifischen Druck zugeführt wird und die Geschwindigkeit des Probenflüssigkeitsstromes auf der Grundlage der Umgebungstemperatur korrigiert wird.

2. Verfahren nach Anspruch 1, bei dem eine Auswahl zwischen

   i) einem Zustand mit niedrigem Skalierfaktor, in welchem die durch die Probenflüssigkeit gehende Lichtmenge reduziert wird, die Dicke der Probenfiüssigkeit vergrößert wird und das Bild mit einem niedrigen Skalierfaktor erzeugt wird, und

   ii) einem Zustand mit hohem Skalierfaktor, in welchem die durch die Probenflüssigkeit gehende Lichtmenge erhöht wird, die Dicke der Probenflüssigkeit reduziert wird und das Bild mit einem hohen Skalierfaktor erzeugt wird, vorgenommen wird,

   und die Korrektur der Geschwindigkeit des Probenflüssigkeitsstromes auch auf der Basis erfolgt, welcher Skalierfaktorzustand ausgewählt wurde.

3. Verfahren nach Anspruch 1 oder 2, bei dem das Licht Strobelicht ist und das Bild ein Stehbild ist.

4. Vorrichtung zum Analysieren von Teilchen durch Hindurchführen von Licht durch einen dünnen breiten Probenflüssigkeitsstrom in einem Hüllenflüssigkeitsstrom, um ein Bild zu erhalten, und Bearbeitung des Bildes zum Analysieren von Bestandteilen in der Probenflüssigkeit mit

   Hüllenflüssigkeitszufuhreinrichtungen (21) zum Zuführen von Hüllenflüssigkeit mit einem spezifischen Druck,

   Probenflüssigkeitsabgabeeinrichtungen (18) zum Zuführen von Probenflüssigkeit mit einer steuerbaren Abgabegeschwindigkeit,

   einem Temperaturfühler (36) zur Feststellung der Umgebungstemperatur,

   einem Temperaturmeßschaltkreis (38) zur Bestimmung der Temperatur auf der Grundlage des Ausgangs des Temperaturfühlers (36) und

   einem Antriebsschaltkreis (34) zum Antreiben der Probenflüssigkeitsabgabeeinrichtungen (18) mit einer Abgabegeschwindigkeit, die auf der Grundlage des Ausgangssignals von dem Temperaturmeßschaltkreis (38) korrigiert ist.

5. Vorrichtung nach Anspruch 4, weiterhin mit

   einer Irisblende (58), die in einem Lichtweg vor einer Strömungszelle (78) angeordnet ist,

Einrichtungen (66) zum Variieren des Öffnungsbereiches der Irisbiende (58),

Projektionslinsen (86, 88) unterschiedlicher Skalierfaktoren, wobei die Linsen einzeln in den Lichtweg nach der Strömungszelle (78) und vor der Bildwahrnehmungseinrichtung (90) positionierbar sind, und

Einrichtungen (94) zum Überwechseln der Projektionslinsen (86, 88),

wobei die Vorrichtung so angeordnet ist, daß sie eine Auswahl zwischen

i) einem Zustand mit niedrigem Skalierfaktor, in welchem die durch die Probenflüssigkeit in der Strömungszelle (78) gehende Lichtmenge reduziert wird, die Dicke der Probenflüssigkeit erhöht wird und das Bild mit einem niedrigen Skalierfaktor erzeugt wird, und

ii) einem Zustand mit hohem Skalierfaktor, in welchem die durch die Probenflüssigkeit in der Strömungszelle (78) gehende Lichtmenge erhöht wird, die Dicke der Probenflüssigkeit reduziert wird und das Bild mit einem hohen Skalierfaktor erzeugt wird, erlaubt, und

wobei die Korrektur der Probenflüssigkeitsabgabegeschwindigkeit auch auf der Basis erfolgt, welcher Skalierfaktorzustand ausgewählt wurde.

## Revendications

1. Procédé d'analyse de particules en faisant passer de la lumière à travers un flux de liquide d'échantillonnage large et fin dans un flux de liquide de gaine afin d'obtenir une image, et en traitant l'image pour analyser des constituants dans le liquide d'échantillonnage, dans lequel
   le liquide de gaine est alimenté à une pression spécifique, et le débit du liquide d'échantillonnage est corrigé sur la base de la température ambiante.

2. Procédé selon la revendication 1, dans lequel

   un choix est fait entre (i) un état de petite échelle dans lequel la quantité de lumière traversant le liquide d'échantillonnage est réduite, l'épaisseur du liquide d'échantillonnage est augmentée, et l'image est produite à une petite échelle, et (ii) un état de grande échelle dans lequel la quantité de lumière traversant le liquide d'échantillonnage est augmentée, l'épaisseur du liquide d'échantillonnage est réduite, et l'image est produite à une grande échelle, et
   la correction du débit du liquide d'échantillonnage est également faite sur la base de l'état d'échelle qui a été choisi.

3. Procédé selon la revendication 1 ou 2, dans lequel la lumière est une lumière à impulsions stroboscopiques et l'image est une image fixe.

4. Appareil pour analyser des particules en faisant passer de la lumière à travers un flux de liquide d'échantillonnage large et fin dans un flux de liquide de gaine afin d'obtenir une image, et le traitement de l'image pour analyser des constituants dans le liquide d'échantillonnage, comprenant :

   des moyens d'alimentation de liquide de gaine (21) pour alimenter du liquide de gaine à une pression spécifique,
   des moyens de décharge de liquide d'échantillonnage (18) pour alimenter du liquide d'échantillonnage à un taux de décharge contrôlable,
   un détecteur de température (36) pour détecter la température ambiante,
   un circuit de mesure de température (38) pour déterminer la température sur la base de la sortie du détecteur de température (36), et
   un circuit d'entraînement (34) pour entraîner les moyens de décharge de liquide d'échantillonnage (18) à un taux de décharge corrigé sur la base d'un signal de sortie en provenance du circuit de mesure de température (38).

5. Appareil selon la revendication 4, comprenant en outre :

un iris (58) disposé dans un chemin de la lumière avant une cellule de flux (78),

des moyens (66) pour varier l'aire d'ouverture de l'iris (58),

des lentilles de projection (86,88) de différentes échelles, les lentilles étant positionnables individuellement dans le chemin de la lumière après la cellule de flux (78) et avant les moyens de détection d'image (90), et

des moyens (94) pour changer les lentilles de projection (86,88),

dans lequel l'appareil est arrangé pour permettre un choix entre (i) un état de petite échelle dans lequel la quantité de lumière traversant le liquide d'échantillonnage dans la cellule de flux (78) est réduite, l'épaisseur du liquide d'échantillonnage est augmentée, et l'image est produite à une petite échelle, et (ii) un état de grande échelle dans lequel la quantité de lumière traversant le liquide d'échantillonnage dans la cellule de flux (78) est augmentée, l'épaisseur du liquide d'échantillonnage est réduite, et l'image est produite à une grande échelle, et

dans lequel la correction du taux de décharge du liquide d'échantillonnage est également faite sur la base de l'état d'échelle qui a été choisi.

FIG.1 PRIOR ART

FIG.2 PRIOR ART

( LOW TEMP. CASE )

FIG.3 PRIOR ART

FIG.4 PRIOR ART

(HIGH TEMP. CASE)

FIG.5 PRIOR ART

FIG.6

EP 0 508 688 B1

NOT CORRECTED LPF (▲)
CORRECTED LPF (△)
NOT CORRECTED HPF (●)
CORRECTED HPF (○)

FIG. 7   PRIOR ART

FIG.8

## FIG.9

FIG.10

FIG.11

FIG.12

80

114

110

FIG.13

110